# EUROPÄISCHE PATENTANMELDUNG

(11) **EP 2 623 565 A1**
(43) Veröffentlichungstag der Anmeldung: **07.08.2013**
(21) Anmeldenummer: 12154037.1
(22) Anmeldetag: 06.02.2012
(51) Int. Cl.: C09D 5/00

(54) **Reparaturwerkstoff**

(71) Anmelder: Siemens Aktiengesellschaft, 80333 München (DE)
(72) Erfinder: Brockschmidt, Mario, 45131 Essen (DE); Kempen, Stefan, Dr., 44388 Dortmund (DE); Pohlmann, Friedhelm, Dr., 45355 Essen (DE); Schmidt, Guido, Dr., 42799 Leichlingen (DE); Staubach, Christian, 45768 Marl (DE)

(57) **Zusammenfassung**

Ein Reparaturwerkstoff, insbesondere zur Reparatur einer Isolierung eines Leiterstabs einer elektrischen Maschine wird angegeben, welcher ein zunächst fließfähiges, kalthärtendes Matrixmaterial enthält. Erfindungsgemäß enthält der Reparaturwerkstoff zudem mindestens einen nanopartikulär vorliegenden Füllstoff, dessen Partikel einen mittleren Partikeldurchmesser von etwa 5 nm bis 200 nm, vorzugsweise etwa zwischen 15 nm und 75 nm aufweisen. Dieser Reparaturwerkstoff ist besonders teilentladungsfest.

## Beschreibung

Die Erfindung bezieht sich auf ein Reparaturharz, insbesondere für eine Isolierung einer elektrischen Maschine.

Als Reparaturharz, im Folgenden auch mit Schutzlack bezeichnet, ist hier ein Harzwerkstoff bezeichnet, welcher dazu dient, eine Isolierung einer elektrischen Anlage, insbesondere einer elektrischen Maschine, welche bereits in Betrieb ist, zu reparieren, beispielsweise Fehlstellen zu beheben, eine Bandagierung der Isolierung zu erneuern oder sonstige Nachbehandlungen vorzunehmen.

Mit dem Begriff "elektrische Maschine" ist allgemein ein Energiewandler bezeichnet, der zwischen elektrischer und mechanischer Energie wandelt, nämlich ein elektrischer Motor oder ein Generator. Eine solche elektrische Maschine umfasst üblicherweise einerseits einen ortsfesten Stator (oder Ständer) sowie einen rotierenden Rotor (oder Läufer). Bei der elektrischen Maschine handelt es sich insbesondere um einen Turbogenerator, wie er üblicherweise in einem Kraftwerk zur Umwandlung von mechanischer in elektrische Energie eingesetzt wird.

Ein Turbogenerator ist derzeit meist als dreisträngige Drehstrom-Synchronmaschine mit einem massiven zwei- oder vierpoligen Läufer realisiert. Der Leistungsbereich eines solchen Turbogenerators reicht typischerweise von ca. 20 MVA bis ca. 2000 MVA.

Der Stator eines üblichen Synchrongenerators umfasst eine Vielzahl von sogenannten Ständerwicklungen, in welchen durch induktive Wechselwirkung mit dem rotierenden, mit einem konstanten Strom beaufschlagten Rotor eine Wechselspannung induziert wird. Die Statorwicklungen sind in einem sogenannten Blechpaket aufgenommen. Dieses dient unter anderem zur Führung und Verstärkung des magnetischen Feldes. Zur Verringerung von Verlusten durch Wirbelströme ist das gesamte Blechpaket aus dünnen, gegeneinander isolierten Blechen aufgebaut. Die Statorwicklungen bestehen aus einer Vielzahl von Stäben, deren jeweilige Mittelstücke (der sogenannte "Aktivteil") in Nuten des Blechpakets eingelegt sind. Die einzelnen Stäbe treten am sogenannten "Wickelkopf" evolventenförmig aus den Nuten aus. Dort sind die einzelnen Stäbe zur Statorwicklung verschaltet (d.h. miteinander kontaktiert).

Die im Blechpaket einliegenden Stäbe bzw. Stabbereiche liegen auf hohem elektrischem Potential und sind daher untereinander, sowie gegen das geerdete Blechpaket durch die Isolierung elektrisch isoliert.

Solche und andere moderne elektrische Anlagen im Nieder-, Mittel- und Hochspannungsbereich müssen besonderen stetig steigenden Anforderungen genügen. Die konstruktiven Forderungen nach großer Leitungsdichte, d.h. dicht benachbarten elektrischen Bauteilen und nahe beieinander liegenden Kupferleitern entstehen aus der Notwendigkeit, immer mehr Elektrotechnik in einem komplexen System unterzubringen, bei gleichzeitig wachsenden Anforderungen an die Designfreiheit durch Minimierung des benötigen Einbauraumes.

Diesem Trend zur Miniaturisierung sind allerdings enge Grenzen gesetzt. Je kompakter das Design elektrotechnischer Komponenten ist, desto größer ist die Gefahr von Ausfällen der Isolierungen und Schutzsysteme aufgrund von Temperaturwechselbelastungen, Stoßströmen, Kriechströmen und Durchschlägen. Äußere Teilentladungen (Koronaentladungen) und das Auftreten von sogenannten "Treeing-Erscheinungen" durch innere Teilentladungen sind visuell kaum erfassbar, können aber zur Erosion von Material der Isolierung und schließlich zum Durchschlag oder Überschlag zwischen zwei auf unterschiedlichen Potentialen liegenden elektrischen Leitern führen. Durch die Komplexität von eng miteinander verflochtenen elektrischen Funktionen lassen sich die Orte, an denen Teilentladungen entstehen, kaum vorherbestimmen und sind konstruktiv nicht vermeidbar. Abgesehen vom Ausfall des Bauteils an sich, ist ein solcher Schaden häufig irreparabel und führt mitunter zur Zerstörung der gesamten Komponente.

Fehlstellen/Fehler an der Isolierung oder in deren Nähe entstehen typischerweise durch - häufig in Kombination auftretenden Belastungen - thermischer, elektrischer oder mechanischer Natur sowie ggf. weiterer Umgebungseinflüsse ("TEAM": "Temperature", "Ambient", "Electrical", "Mechanical") oder durch Fertigungsfehler.

Herkömmlicherweise werden zur Reparatur solcher Fehlstellen kalthärtende Reaktionsharzsysteme eingesetzt, deren wesentlichen Komponenten häufig auf der Basis von Epoxynovolaken bestehen, welche mit aliphatischen Aminen kalt vernetzt werden können.

Ein derartiges Harzsystem verfügt mitunter über eine Temperaturbeständigkeit von über 200°C und wird aufgrund seiner Beständigkeit gegenüber oben genannten TEAM-Belastungen als Reparaturharz in Großgeneratoren eingesetzt. Soll ein größerer Teilbereich der Isolierung ausgebessert werden, wird dem Harz zur Verbesserung der elektrischen Festigkeit häufig zusätzlich Glimmer zugesetzt.

Der Erfindung liegt die Aufgabe zugrunde, ein besonders teilentladungsfestes Reparaturharz anzugeben.

Diese Aufgabe wird erfindungsgemäß gelöst durch die Merkmale des Anspruchs 1. Demnach ist ein Reparaturwerkstoff, insbesondere zur Reparatur einer Isolierung eines Leiterstabs einer elektrischen Maschine vorgesehen, welcher ein zunächst fließfähiges kalthärtendes Matrixmaterial enthält. Als "kalthärtend" wird hierbei allgemein ein Matrixmaterial verstanden, das bei Raumtemperatur (als Temperaturen bis etwa 30°C) ohne zusätzliche Wärmezufuhr aushärtet. Erfindungsgemäß enthält der Reparaturwerkstoff zudem mindestens einen Füllstoff, der in Form von Partikeln mit einem mittleren Partikel- oder Korndurchmesser von etwa 5 nm bis 200 nm, vorzugsweise etwa 15 nm bis 70 nm vorliegt. Die eingesetzten Partikel sind aufgrund ihrer Größe nachfolgend auch als "Nanopartikel" bezeichnet.

Als mittlerer Partikeldurchmesser ist dabei insbesondere der Medianwert einer die Partikel des Füllstoffs charakterisierenden Partikelgrößenverteilung bezeichnet. Dabei ist der Partikeldurchmesser im Fall von nicht-sphärischen Nanopartikeln durch einen der jeweiligen Partikelform zugeordneten Äquivalentdurchmesser gegeben. In einer von mehreren möglichen Definitionen lässt sich der Äquivalentdurchmesser eines nicht-sphärischen Partikels, angeben als der Durchmesser einer Kugel, deren Volumen dem Volumen des Partikels gleicht.

Der erfindungsgemäße Reparaturwerkstoff ist durch den Einsatz der Nanopartikel besonders teilentladungsbeständig. Dies liegt insbesondere daran, dass vorteilhafterweise eine herkömmlicherweise durch Teilentladungen hervorgerufene Materialerosion durch die Nanopartikel gehemmt wird. Hierdurch wird die Lebensdauer einer mit dem erfindungsgemäßen Reparaturharz behandelten Isolierung erheblich erhöht und entsprechend die Fehleranfälligkeit eines übergeordneten Gesamtsystems deutlich reduziert. Ferner verbessern die Nanopartikel die mechanische Verbindung des Reparaturharzes zu der im Reparaturfall häufig noch teilweise vorhandenen Isolierung, bzw. zu deren Harzmatrix, wodurch der Bildung von Fehlstellen wie z.B. Rissen an den Grenzflächen zwischen dem Reparaturharz und der bestehenden Isolierung entgegengewirkt wird.

Der erfindungsgemäße Reparaturwerkstoff zeichnet sich zudem durch eine Reihe von weiteren Vorteilen aus:
- hohe Kratzfestigkeit,
- Barriere-Effekte gegen Gase, Wasserdampf und Lösemittel,
- hohe Witterungsbeständigkeit und geringe thermische Alterung,
- geringer Härtungsschrumpf, sowie geringe Reaktionswärme,
- geringe thermische Ausdehnung und innere Spannung,
- hohe Reißfestigkeit, Bruchzähigkeit und hohes Elastizitätsmodul,
- gute Haftung auf zahlreichen anorganischen und organischen Substraten, wie beispielsweise Keramik, Chips, DCB ("direct copper bonding", kupferbeschichtete Keramik), und/oder Kunststoffgehäusen,
- geringe Brandlast, durch einen vergleichsweise geringen Anteil an organischem Matrixmaterial,
- kein Einsatz von VOC ("volatile organic compounds", flüchtige organische Verbindungen).

In bevorzugter Ausführungsform ist der nanopartikuläre Füllstoff aus einem anorganischen Material, insbesondere aus einem keramischen Oxid, vorzugsweise aus
- Siliciumdioxid (Si02)
- Titandioxid (Ti02)
- Aluminiumoxid (A1203)
- Diaspor (AlO(OH)) und/oder
- Bornitrid (BN) gefertigt.

Es ist jedoch auch denkbar, dass der Füllstoff aus einem synthetischen oder natürlichen Schichtsilikat gefertigt ist. Der Füllstoff kann als (z.B. flammpyrolytisch hergestelltes) Pulver oder in Lösung vorliegen. Ein kommerziell erhältlicher Füllstoff auf Basis von Silziumdioxid-Partikeln wird beispielsweise unter dem Markennamen "Nanopox" von der Fa. Nanoresins AG vertrieben.

In herstellungstechnisch zweckmäßiger Ausführungsform sind die Nanopartikel im Wesentlichen kugelförmig.

Ein Massenanteil des nanopartikulären Füllstoffs von etwa 40% hat sich als vorteilhaft erwiesen.

Als Matrixmaterial enthält der Reparaturwerkstoff bevorzugt ein Novolak, Epoxidharz (insbesondere auf Basis von Bisphenol-A oder Bisphenol-F) oder Novolak-Epoxidharz (Epoxynovolak).

Vorzugsweise ist das Matrixmaterial mit Hilfe eines aliphatischen Aminhärters aushärtbar.

In einer besonders vorteilhaften Ausführungsform enthält der Reparaturwerkstoff einen Fotoinitiator, welcher durch elektromagnetische Strahlung, insbesondere durch UV-Strahlung aktivierbar ist. Dabei ist das Matrixmaterial mit Hilfe des Fotoinitiators aushärtbar. Vorteilhafterweise haben dispers verteilte Nanopartikel vergleichsweise wenig Einfluss auf die Lichtdurchlässigkeit eines Systems, so dass trotz Einsatz eines Füllstoffs vergleichsweise große Schichtdicken des Reparaturwerkstoffs gut durchhärtbar sind. Zudem zeigt sich diese Ausführungsform vorteilhafterweise als besonders anwenderfreundlich, da es sich hierbei um ein sogenanntes Einkomponentensystem handelt. Bei dem Fotoinitiator handelt es sich insbesondere um ein Acrylat oder ein aliphatisches Epoxid.

Der Reparaturwerkstoff ist vorzugsweise in einer Schichtdicke von mindestens 1 mm, vorzugsweise 2 mm bis 5 mm applizierbar. Er hat insbesondere eine entsprechend hohe Viskosität, so dass sich die genannten Schichtdicken erreichen lassen, ohne zu zerlaufen.

In einer weiteren Ausführungsform enthält der Reparaturwerkstoff mindestens einen weiteren (mikroskaligen) partikulären Füllstoff, dessen Partikel einen mittleren Partikeldurchmesser von etwa 0,5 µm bis 500 µm, insbesondere etwa 2 µm bis 50 µm aufweisen. Hierdurch wird die Teilentladungsfestigkeit des Reparaturwerkstoffs vorteilhafterweise weiter erhöht. Der mikroskalige Füllstoff enthält insbesondere Glimmer, Siliziumdioxid (SiO₂), Titandioxid (TiO₂) und/oder Aluminiumoxid (Al₂O₃).

Vorzugsweise ist der Reparaturwerkstoff streichfähig oder sprühfähig.

Der vorgestellte Reparaturwerkstoff findet bevorzugt dort Verwendung, wo Teilentladungen mit besonders hoher Wahrscheinlichkeit zu erwarten sind, also insbesondere als Schutzlack für eine miniaturisierte elektronische Schaltung oder für eine leistungsstarke elektrische Maschine, insbesondere zur Applikation bei einer Isolierung eines Leiterstabs, insbesondere einer Ständerwicklung.

Nachfolgend wird ein Ausführungsbeispiel der Erfindung näher erläutert.

In dem Ausführungsbeispiel enthält der Reparaturwerkstoff ein Matrixmaterial aus einem Epoxidklebstoff, konkret aus dem Epoxidklebstoff Duralco 4461 IP (Fa. Polytec), welcher mit einem Massenanteil von 40% Nanopartikeln aus Si02 mit einem Teilchendurchmesser von etwa 25 nm gefüllt ist.

Um die Teilentladungsbeständigkeit des vorgestellten Reparaturharzes zu verifizieren, wurden Untersuchungen gemäß einer Toepler'schen Gleitanordnung durchgeführt. Dabei wird eine Platte aus dem zu untersuchenden Material auf eine erdseitig kontaktierte Kupferelektrode gelegt. Auf die Platte wird eine Zylinderelektrode mit einem Radius von 1 mm am Querschnitt vertikal aufgesetzt. Im Zwickel zwischen Elektrode und Platte entstehen bei konstanter Spannung örtlich begrenzte äußere Teilentladungen, die für eine Erosion des zu untersuchenden Materials sorgen. Anschließend wurde mit Hilfe einer Lasertriangulation die Oberfläche des Materials auf Abtrag hin untersucht.

Vergleichende Untersuchungen haben gezeigt, dass unter gleichen Versuchsbedingungen (240 h Alterung bei einer elektrischen Feldstärke von 13 kV/mm) eine Platte aus dem oben genannten Reparaturharz eine maximale Erosionstiefe von 34µm und ein erodiertes Gesamtvolumen von 1,69 mm³ aufweist, im Gegensatz zu einem herkömmlichen (ungefüllten) Reparaturharz der oben genannten Art, welches eine maximale Erosionstiefe von 194 µm bzw. ein abgetragenes Gesamtvolumen von 7 mm³ aufweist.

## Patentansprüche

1. Reparaturwerkstoff,
insbesondere zur Reparatur einer Isolierung,
welcher ein zunächst fließfähiges Matrixmaterial enthält, das in einer kalthärtenden Aushärtungsreaktion zu einem Feststoff aushärtbar ist, und
welcher einen nanopartikulären Füllstoff enthält, dessen Partikel einen mittleren Partikeldurchmesser von etwa 5 nm bis 200 nm, vorzugsweise etwa 15 nm bis 70 nm aufweist.

2. Reparaturwerkstoff nach Anspruch 1,
wobei der Füllstoff aus einem anorganischen Material, insbesondere aus
• Siliziumdioxid (Si02)
• Titandioxid (Ti02)
• Aluminiumoxid (A1203)
• Diaspor (AlO(OH)) und/oder
• Bornitrid (BN) gefertigt ist.

3. Reparaturwerkstoff nach Anspruch 1 oder 2,
wobei die Partikel des Füllstoffs kugelförmig sind.

4. Reparaturwerkstoff nach einem der Ansprüche 1 bis 3,
wobei der nanopartikuläre Füllstoff einen Massenanteil von etwa 40% aufweist.

5. Reparaturwerkstoff nach einem der Ansprüche 1 bis 4,
obei das Matrixmaterial ein Novolak, Epoxidharz oder Novolak-Epoxidharzsystem ist.

6. Reparaturwerkstoff nach einem der Ansprüche 1 bis 5,
wobei das Matrixmaterial mit Hilfe eines aliphatischen Aminhärters aushärtbar ist.

7. Reparaturwerkstoff nach einem der Ansprüche 1 bis 6, welcher einen Fotoinitiator enthält,
wobei das Matrixmaterial mit Hilfe des Fotoinitiators aushärtbar ist.

8. Reparaturwerkstoff nach einem der Ansprüche 1 bis 7, welcher in einer Schichtdicke von mindestens 1 mm applizierbar ist.

9. Reparaturwerkstoff nach einem der Ansprüche 1 bis 8, welcher mindestens einen weiteren mikropartikulären Füllstoff enthält, dessen Partikel einen mittleren Partikeldurchmesser von 0,5 bis 500 µm aufweisen.

10. Reparaturwerkstoff nach einem der Ansprüche 1 bis 9, welcher streichfähig oder sprühfähig ist.

11. Verwendung des Reparaturwerkstoffs gemäß einem der Ansprüche 1 bis 10,
als einen Schutzlack für eine miniaturisierte elektronische Schaltung.

12. Verwendung des Reparaturwerkstoffs gemäß einem der Ansprüche 1 bis 10,
als Schutzlack für eine elektrische Maschine.
